# EUROPEAN PATENT APPLICATION

(11) **EP 1 445 899 A2**
(43) Date of publication of application: **11.08.2004**
(21) Application number: 04002572.8
(22) Date of filing: 05.02.2004
(51) Int. Cl.: H04L 12/56

(54) **Method for broadcasting data in a mobile communication system**

(30) Priority: 05.02.2003 KR 2003007290
(71) Applicant: Samsung Electronics Co., Ltd., Suwon-si, Gyeonggi-do (KR)
(72) Inventor: Kim, Hoe-Won c/o Samsung Electronics Co.,Ltd., Suwon-si, Gyeonggi-do (KR)
(74) Representative: Grünecker, Kinkeldey, Stockmair & Schwanhäusser Anwaltssozietät

(57) **Abstract**

A method for broadcasting data in a mobile communication system including a core network and a plurality of mobile stations (MSs) is provided. The core network broadcasts transmission data over one shared downlink channel to the MSs within one base transceiver station (BTS) service area. The MSs generate receiving report data indicating whether the data has successfully been received, and transmit the receiving report data to the core network at uniquely assigned uplink channel positions.

## Description

The present invention relates generally to mobile communication systems, and in particular, to a method for broadcasting data in a mobile communication system.

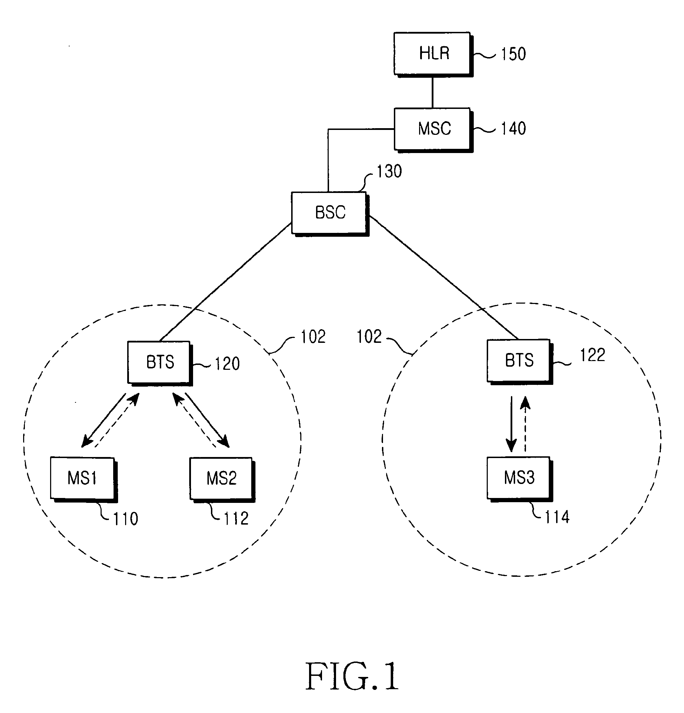

FIG. 1 illustrates a configuration of a general mobile communication system. Referring to FIG. 1, mobile stations (MSs) 110, 112 and 114 are connected to base transceiver stations (BTSs) 120 and 122 through air interfaces. Upon receipt of a terminating call to an MS in a corresponding service area from a base station controller (BSC) 130, the BTSs 120 and 122 transmit the terminating call to the corresponding MS, and upon receipt of an originating call from a particular MS, the BTSs 120 and 122 transmit the originating call to the BSC 130. The BSC 130 processes the overall calls, such as a voice call, a circuit call and a packet call for each MS. Moreover, the BSC 130 performs a signaling operation with a mobile station center (MSC) 140 and performs handover.

The MSC 140 is connected to a home location register (HLR) 150. The MSC 140 carries out a call switching function for handling terminating/originating requests of the MSs 110, 112 and 114, and implements a network function with other MSCs. The HLR 150 is a database for storing and managing data for mobile telephone subscribers. The HLR 150 registers and deletes subscribers' locations and performs inquiries about subscriber information.

The above-described mobile communication system carries out multiple access radio communication between the BTSs 120 and 122 and the MSs 110, 112 and 114 over radio frequency (RF) channels providing physical paths for transmitting communication signals, such as voice, data and image signals. In FIG. 1, uplink (or reverse) channels designated by dotted arrows are used by the MSs 110, 112 and 114 to attempt a call with the BTSs 120 and 122 or respond to a message received over a paging channel. Downlink (or forward) channels designated by solid arrows are used to transmit voice, data and signaling information to the MSs 110, 112 and 114 from the BTSs 120 and 122. That is, one RF channel is comprised of one uplink channel and one downlink channel. Such a connection method in the mobile communication system is required for bidirectional data communication, for example, for a voice call.

In unilaterally transmitting data to a particular MS in the mobile communication system, the data is broadcast unidirectionally instead of assigning the physical channel, that is, the uplink channel and the downlink channel, to each MS. Such broadcasting is a communication method used to provide system information or simple data information to the MSs in the mobile communication system. In this case, since there is no separate bidirectional handshaking, that is, feedback for received data by the MSs, the data should be repeatedly broadcasted at stated periods.

In the mobile communication system, in the case where large-capacity data is broadcast to a plurality of MSs, the plurality of MSs can not transmit feedback information for the received data. In other words, the plurality of MSs cannot transmit a retransmission request to the mobile communication system, making it impossible to guarantee stable data communication.

It is, therefore, the object of the present invention to provide a data broadcasting method for enabling a plurality of MSs to share a reception channel or a downlink channel, and to independently transmit feedback information for received data over a transmission channel or an uplink channel in a mobile communication system.

This object is solved by the subject matters of the independent claims.

Preferred embodiments are defined in the dependent claims.

To achieve the above object, there is provided a method for broadcasting data in a mobile communication system including a core network and a plurality of mobile stations (MSs). The method comprises the steps of broadcasting, by the core network, transmission data over one shared downlink channel to the MSs within one base transceiver station (BTS) service area, and generating, by the MSs, receiving report data indicating whether the transmission data has successfully been received, and transmitting the receiving report data to the core network at uniquely assigned uplink channel positions.

The above features and advantages of the present invention will become more apparent from the following detailed description when taken in conjunction with the accompanying drawings in which:
FIG. 1 illustrates a configuration of a general mobile communication system;
FIG. 2 illustrates a configuration of a mobile communication system according to a preferred embodiment of the present invention;
FIG. 3 illustrates a data format transmitted over a downlink shared data channel by a core network according to a preferred embodiment of the present invention;
FIG. 4 is a block diagram of a mobile station (MS) according to a preferred embodiment of the present invention;
FIG. 5 illustrates the contents of data exchanged between a core network and MSs according to a preferred embodiment of the present invention;
FIG. 6 illustrates the contents of data actually transmitted and received by a particular MS according to a preferred embodiment of the present invention; and
FIG. 7 is a flow chart illustrating a data receiving procedure of an MS according to a preferred embodiment of the present invention.

Several preferred embodiments of the present invention will now be described in detail with reference to the annexed drawings. In the following description, a detailed description of known functions and configurations incorporated herein has been omitted for conciseness.

In a preferred embodiment of the present invention, a network comprised of BTS, BSC, MSC and HLR, for providing a mobile communication service to MSs, is defined as a core network.

The present invention provides a data broadcasting method capable of stably transmitting data through bidirectional handshaking during data communication. For the data handshaking in the core network, transmission data of a data block is comprised of a header block, a retransmission data block, and a transmission data block. In the downlink handshaking to a plurality of MSs from the core network, each MS reports whether transmission data has successfully been received by transmitting bitmap data. The core network collecting the bitmap data assigns a demanded retransmission data block to a retransmission data block position of the transmission data block before transmission to the plurality of MSs. Each MS then analyzes header information to receive the retransmission data block or skip reception of the retransmission data block. Moreover, each MS waits for a transmission request by the core network in order to uplink the bitmap data as to whether the transmission data has successfully been received, and uplinks the bitmap data at a uniquely assigned uplink channel position. In this case, MSs share an uplink channel.

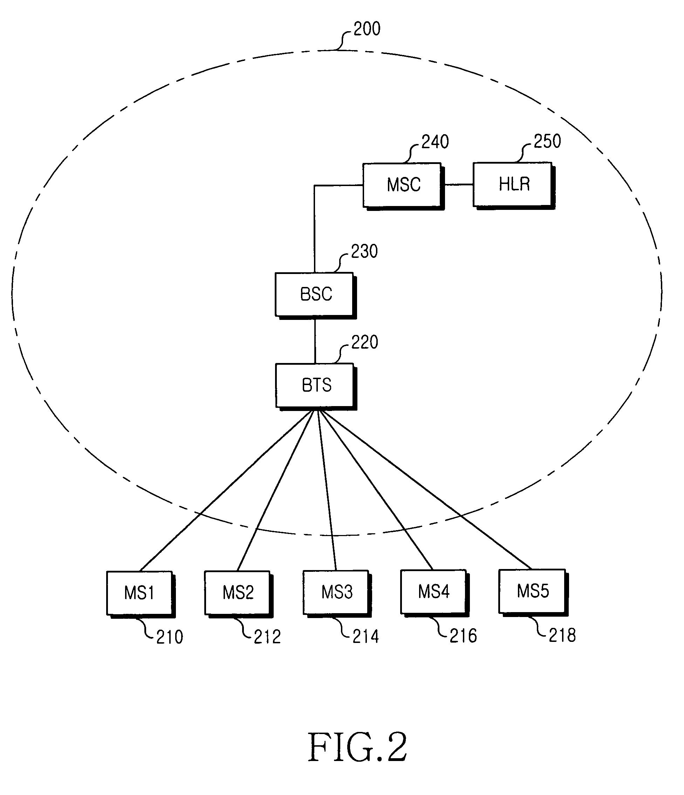

FIG. 2 illustrates a configuration of a mobile communication system according to a preferred embodiment of the present invention. MSs 210, 212, 214, 216, and 218 are designed to enable data broadcasting communication. Upon receipt of data broadcast from a core network 200, the MSs 210-218 analyze header information to receive a retransmission data block or skip a receiving operation for the retransmission data block. The MSs 210-218 further generate bitmap data indicating whether the data block has successfully been received. The MSs 210-218 wait for a transmission request by the core network 200 and uplink the generated bitmap data at an assigned uplink channel position.

Referring to FIG. 2, the MSs 210-218 receive data broadcasted through a BTS 220. The core network 200 includes, as stated above, the BTS 220, a BSC 230, an MSC 240, and an HLR 250. The core network 200 broadcasts data to a plurality of MSs 210-218 through one downlink channel. For this purpose, the core network 200 splits data to be transmitted to the MSs 210-218 into the data block having a proper size. The size of the data block can be fixed or variable. For instance, the data block can variably be managed in size by adding block size information to the transmission data block.

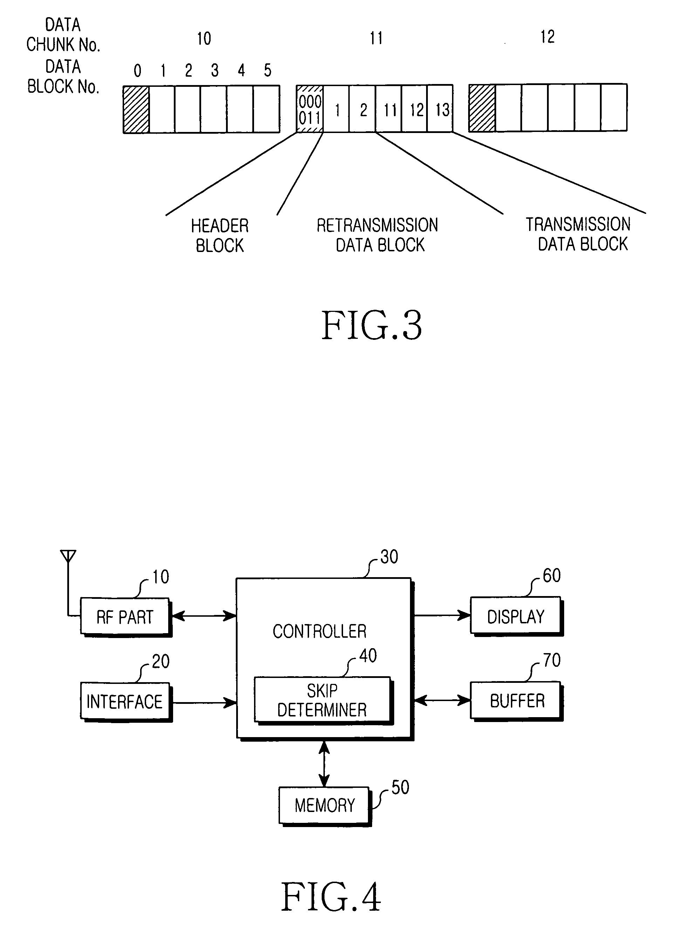

FIG. 3 illustrates a data format transmitted over a downlink shared data channel by a core network according to a preferred embodiment of the present invention. Referring to FIG. 2 and FIG. 3, the core network 200 splits data to be transmitted into a plurality of main data blocks 10, 11 and 12. Each main data block 10-12 may uniquely be numbered. One main data block 10-12 is divided into a plurality of smaller data blocks 0-5. For the smaller data block, a data size unit for data encoding/decoding can be typically used. For example, in a GSM (Global System for Mobile communication), the data block refers to 8*57=456-bit physical data which corresponds to 4 normal bursts. As shown in FIG. 3, the smaller data block can uniquely be numbered from '0' and on in time order. One main data block 10-12 is comprised of a header block, a retransmission data block, and a transmission data block. The header block has information on each block of the interior of a corresponding main data block and includes downlink block bitmap information (DMAP). The DMAP has information on the number and contents of retransmission blocks contained in the downlink shared data channel. Specifically, the DMAP is a bit array, and each bit corresponds to each smaller data block included in one main data block previously transmitted to a plurality of MSs from the core network. Therefore, a size of the bit array is equal to the number of smaller data blocks included in the main data block. The retransmission data block has retransmission information in response to a retransmission request by the MSs. The transmission data block has information to be transmitted to the MSs. Since the header block contains important information for interpreting the other blocks, it is preferable to stably transmit the header block through more enhanced channel coding.

FIG. 4 illustrates a construction of an MS according to a preferred embodiment of the present invention. Referring to FIG. 4, a controller 30 controls the overall operation of the MS. Upon receipt of data broadcasted from the core network 200, the controller 30 analyzes the header information of the received data to receive the retransmission data block or skip a receiving operation for the retransmission data block. As described above, the core network 200 splits transmission data of the main data block before transmission to the MS for data handshaking. Therefore, the controller 30 necessarily generates a receiving report block (RRB) for each main data block. This RRB information should successfully be uplinked to the core network 200 from the MS. The core network 200 can determine by the RRB whether receipt of the previous main data block by the MS is successful. The controller 30 contains mobile receiving block bitmap information (MMAP) designated as the bitmap information when generating the RRB for the received smaller data block. The MMAP is a bit array. Each bit in the MMAP represents a result of receipt of each smaller data block included in the main data block just before an actually uplinked time point of the RRB. That is, if a bit #n is '1', it means that receipt of a data block #n of the previous data chunk is failed. If the bit #n is '0', it means that decoding at the MS is successful. Therefore, the size of this bit array is identical to the number of smaller data blocks in the previous main data block.

The main data block transmitted to the MS from the core network 200 has the header block, the retransmission data block, and the transmission data block. The controller 30 may include a skip determiner 40 for determining whether to receive the retransmission data block of the received main data block. The skip determiner 40 determines whether to skip a receiving operation for the retransmission data block, by using the MMAP for the previously received main data block, OLD_MMAP, and the DMAP transmitted from the core network 200.

An RF part 10 transmits and receives voice and character data, and control data as radio signals, under the control of the controller 30. An interface 20 includes a plurality of numeral keys and function keys, and provides key input data corresponding to a key input by a user to the controller 30. The numeral keys and function keys may be achieved by software. A display 60 displays various messages, for example, on an LCD (Liquid Crystal Display) (not shown), under the control of the controller 30. A memory 50 includes a program memory for storing program data needed to control the operation of the MS and a data memory for storing data generated during a control operation or by a user.

The MS according to a preferred embodiment of the present invention includes a buffer 70. The main data block received from the core network 200 is temporarily stored in the buffer 70. If smaller data blocks of the main data block are not completely received, the controller 30 temporarily stores the smaller data blocks received up to the present in the buffer 70 and receives the other smaller data blocks which have not been received yet.

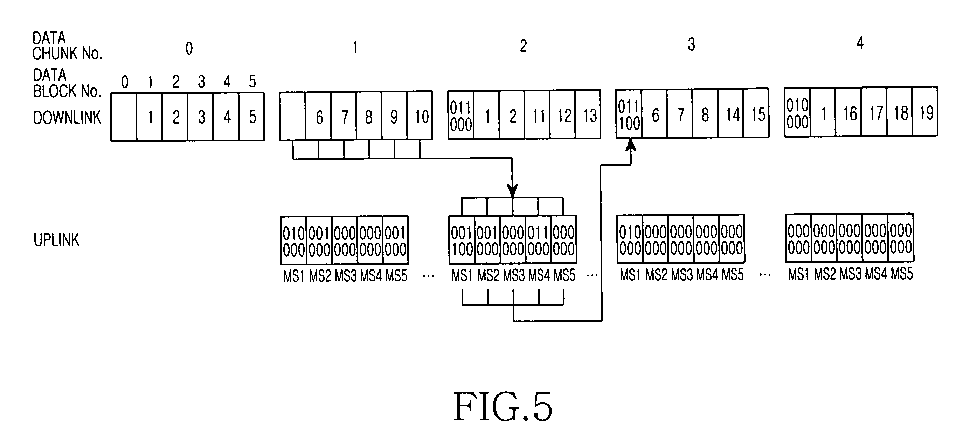

FIG. 5 illustrates the contents of data exchanged between a core network and MSs according to a preferred embodiment of the present invention. Shown in FIG. 5 are the contents of data included in an uplink channel and a downlink channel between the core network and the MSs. The main data blocks 0-4, to be received by the MSs, each consisting of the header block, the retransmission data block and the transmission data block, are consecutively assigned to the downlink channel from the core network 200 to the MSs 210-218. On the other hand, the uplink channel transmitted from the MSs 210-218 to the core network 200 is shared the MSs serving as target MSs for the data broadcasting communication. Each MS should successfully uplink the RRB once for each main data block. The RRB includes the MMAP indicating by bitmap information whether receipt of the previous main data block is successful.

As illustrated in FIG. 5, the contents of the MMAP uplinked during a main data block #2 indicate whether each data block of a main data block #1 has successfully been received. In FIG. 5, the first MS MS 1 has not decoded smaller data blocks #2 and #3 of the received main data block. The DMAP of a main data block #3 is a bit array of {0, 1, 1, 1, 0, 0,..}. This means that one or more MSs have requested during the main data block #2 that smaller data blocks #1, #2 and #3 of the main data block #1 be retransmitted. The core network sequentially retransmits corresponding smaller data blocks requested by one or more MSs beginning at a position of the smaller data block #1 of the current main data block #3. The position and number of retransmission data blocks contained in a particular main data block is identical to the position and number of bits '1' contained in the DMAP. Consequently, the number of transmission data blocks is obtained by subtracting the number of retransmission data blocks and the number of header blocks from the entire number of smaller data blocks.

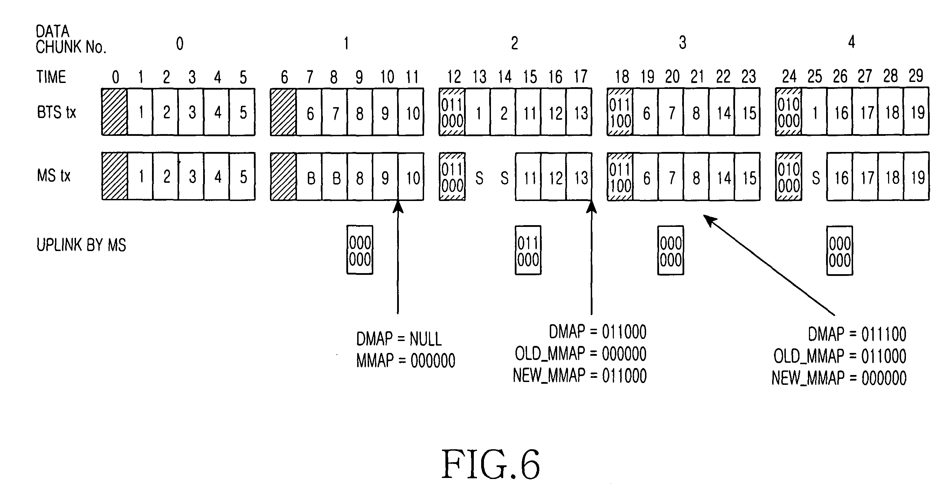

FIG. 6 illustrates the contents of data actually transmitted and received by a particular MS according to a preferred embodiment of the present invention. Referring to FIG. 6, since the MS hasn't decoded smaller data blocks #1 and #2 in a main data block #1, it uplinks the MMAP of {0, 1, 1, 0, 0, 0,..} during a main data block #2 and receives the DMAP of {0, 1, 1, 1, 0, 0,..} during a main data block #3. More specifically, if the MS receives a main data block #0, it updates the MMAP for the main data block #0. Thereafter, the MS transmits the RRB including the MMAP for the main data block #0 while receiving the main data block #1. The main data block #1 has the header block including the DAMP of a bitmap indicating the retransmission data block and also may have the retransmission data block. That is, if the DMAP indicates that there is no retransmission data block, the received main data block #1 has no retransmission data block. For example, upon receipt of the main data block #1, if a particular MS has not decoded smaller data blocks #6 and #7 of the main data block #1, it generates the RRB for the data block #1 using the MMAP indicating whether these smaller data blocks have successfully been received. The MS transmits the RRB for the main data block #1 to the core network while receiving the main data block #2. The core network then determines the retransmission data block by consulting the RRB for the main data block #1, received from a plurality of MSs. The core network should meet retransmission requests by the respective MSs on the basis of the RRB. As one method, the core network performs a bit-wise OR operation between respective bit positions of the MMAP reported by each MS. In other words, if even one MS requests that a smaller data block be retransmitted, the core network retransmits a corresponding smaller data block.

Upon receipt of the main data block #2, the MS determines whether to receive the retransmission block of the main data block #2 by consulting the DAMP of the main data block #2 and the OLD_MMAP. The OLD_MMAP represents whether the smaller data blocks for the main data block #1 have successfully been received, and the DMAP indicates the retransmission data block in the main data block #2. Namely, the MS determines whether to receive the retransmission data block according to the OLD_MMAP and receives the retransmission data block of the main data block #2 according to the DMAP. If it is not necessary to receive the retransmission data block, the MS skips a receiving operation for the retransmission data block.

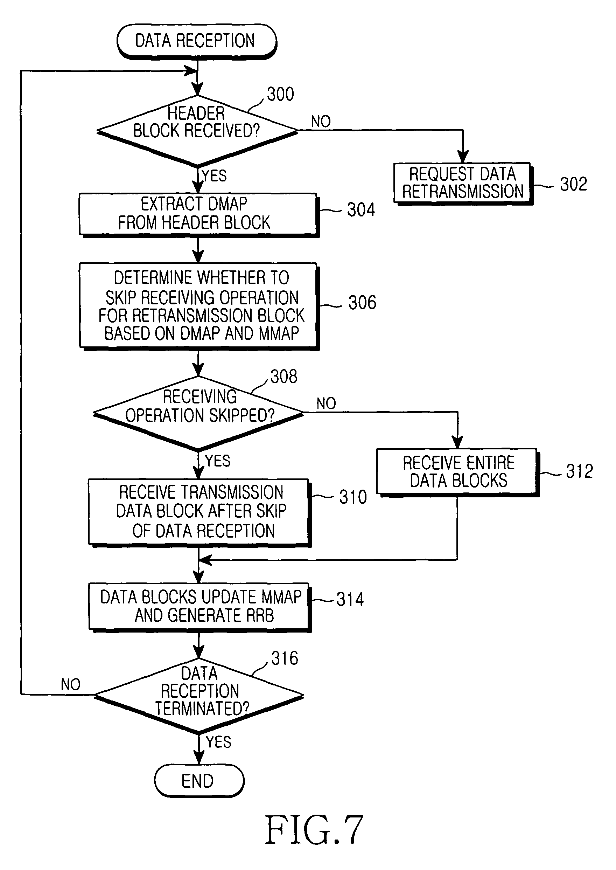

FIG. 7 is a flow chart illustrating a data receiving procedure of an MS according to a preferred embodiment of the present invention.

Referring to FIGs. 4 and 7, the controller 30 of the MS determines whether received data has a header block at step 300. If the header block of the data is not received, the controller 30 requests data retransmission at step 302 because the MS doesn't know which data is received. Upon receipt of the header block of the data, the controller 30 extracts the DMAP from the header block at step 304. The skip determiner 40 of the controller 30 determines whether to skip a receiving operation for the retransmission data block on the basis of the DAMP and the MMAP indicating whether the smaller data blocks for the previously received main data block have successfully been received at step 306. It is checked whether the receiving operation for the retransmission data block is skipped at step 308. That is, the controller 30 determines whether to receive the retransmission data block of the currently received main data block according to the OLD_MMAP and determines the retransmission data block according the DAMP of the header block. If the retransmission data block for the current main data block should be received, the controller 30 receives all the retransmission blocks and the transmission data blocks of the received main data block at step 312. If there is no need to receive the retransmission data block for the previous main data block, the controller 30 skips the receiving operation for the retransmission data blocks as many times as the number of retransmission blocks indicated by the DMAP and receives the transmission data blocks, at step 310. The controller 30 updates the MMAP for the currently received main data block and generates the RRB, at step 314. The controller 30 determines whether a data receiving operation has been terminated at step 316. If not, the controller 30 returns to step 300.

On the other hand, the core network 200 may transmit an identification number (ID) of the MS which is to transmit the RRB at a position of the next block of the uplink, to each MS. Whenever each smaller data block is received, all the MSs check whether there is a transmission request from the core network. If so, the MSs transmit the RRB at a position of the next uplink block. The MSs receive the next block of the RRB transmission block to determine whether their blocks have successfully been received.

As described above, in data communication between two or more MSs within one BTS service area, the BTS assigns one physical channel between the two or more MSs. Therefore, it is possible to prevent a waste of resources and effectively transmit data in the case where local area half duplex data connection is required.

While the invention has been shown and described with reference to a certain preferred embodiment thereof, it will be understood by those skilled in the art that various changes in form and details may be made therein without departing from the scope of the invention as defined by the appended claims.

## Claims

1. A method for broadcasting data in a mobile communication system including a core network and a plurality of mobile stations, comprising the steps of:
broadcasting, by the core network, transmission data over one shared downlink channel to the mobile stations within one base transceiver station service area; and
generating, by the mobile stations, receiving report data indicating whether the data has successfully been received, and transmitting the receiving report data to the core network at uniquely assigned uplink channel positions.

2. The method of claim 1, wherein the core network splits the data of a main data block.

3. The method of claim 2, wherein the main data block is comprised of a header block, a retransmission data block and a transmission data block.

4. The method of claim 3, wherein each of the mobile stations analyzes the header block of the received data, to determine whether to receive the retransmission data block.

5. The method of one of claims 1 to 4, wherein each of the mobile stations waits for a transmission request from the core network in order to uplink the receiving report data indicating whether the transmission data has successfully been received.

6. A mobile station adapted to operate according to one of claims 1 to 5.
